(19) Europäisches Patentamt
European Patent Office
Office européen des brevets

(11) **EP 3 481 020 B1**

(12) **EUROPÄISCHE PATENTSCHRIFT**

(45) Veröffentlichungstag und Bekanntmachung des Hinweises auf die Patenterteilung:
**01.09.2021 Patentblatt 2021/35**

(51) Int Cl.:
***H04L 27/26*** *(2006.01)*   ***H04L 5/00*** *(2006.01)*
***H04B 3/54*** *(2006.01)*   ***H04W 56/00*** *(2009.01)*

(21) Anmeldenummer: **17200243.8**

(22) Anmeldetag: **07.11.2017**

(54) **VERFAHREN ZUR SYNCHRONISATION VON SENDE- UND EMPFANGSEINHEITEN BEI MEHRTRÄGERSIGNALÜBERTRAGUNG**

METHOD FOR SYNCHRONISING TRANSMISSION AND RECEPTION UNITS IN MULTI-CARRIER SIGNAL TRANSMISSION

PROCÉDÉ DE SYNCHRONISATION D'UNITÉS D'ÉMISSION ET DE RÉCEPTION DANS UNE TRANSMISSION DE SIGNAUX MULTIPORTEUSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.05.2019 Patentblatt 2019/19**

(73) Patentinhaber: **Siemens Aktiengesellschaft 80333 München (DE)**

(72) Erfinder:
• **Frankenberg, Robert**
  **1210 Wien (AT)**

• **Kussyk, Jaroslaw**
  **1170 Wien (AT)**

(74) Vertreter: **Maier, Daniel Oliver**
  **Siemens AG**
  **Postfach 22 16 34**
  **80506 München (DE)**

(56) Entgegenhaltungen:
**EP-A1- 2 461 502     WO-A1-99/52252**
**WO-A1-2016/015782     US-A1- 2004 114 551**
**US-A1- 2013 136 063     US-A1- 2014 334 478**

**Beschreibung**

**Technisches Gebiet**

Die vorliegende Erfindung betrifft ein Verfahren zur Synchronisation zwischen einer Sendeeinheit und zumindest einer Empfangseinheit eines Kommunikationssystems bei Mehrträgersignalübertragung über einen Übertragungskanal, insbesondere bei Nutzung so genannter Powerline Communcation bzw. PLC und/oder einer Trägerfrequenz-Nachrichtenübertragung über Hochspannungsleitungen bzw. TFH-Kommunikation. Dabei werden bei der Mehrträgersignalübertragung eine Vielzahl von Trägerfrequenzen des Übertragungskanals für eine Signalübertragung genutzt.

**Stand der Technik**

Oft ist es aus wirtschaftlichen Gründen wichtig, eine vorhandene Infrastruktur (z.B. Nachrichtenübertragungsnetze, Telefonnetze, Funknetze oder Stromnetze) für eine Übertragung von Informationen und/oder Daten zu nutzen. So können beispielsweise vorhandene, elektrische Leitungen im Niederspannungsnetz oder Leitungen von Hoch- und/oder Mittelspannungs-Freileitungen für einen Informations- und/oder Datenaustausch zwischen Sendeeinheiten oder Sendern und Empfangseinheiten oder Empfängern eingesetzt werden. Bei einem Informationsaustausch über Hoch- und/oder Mittelspannungs-Freileitungen werden Trägerfrequenzanlagen in einem Frequenzbereich zwischen 30kHz und 500 kHz bzw. in manchen Regionen bis zu einigen MHz verwendet, wobei dieser Informationsaustausch auch als Trägerfrequenz-Nachrichtenübertragung über Hochspannungsleitungen oder TFH-Kommunikation bezeichnet wird. Eine Nutzung von vorhandenen, elektrischen Leitungen im Niederspannungsnetz zum Informationsaustausch wird als Power- Line-Communication oder PLC bezeichnet, wobei es sich bei PLC-Vorrichtungen bzw. -Systemen technisch gesehen ebenfalls um Trägerfrequenzanlagen handelt.

Für derartige Trägerfrequenzanlagen wird üblicherweise die so genannte Trägerfrequenztechnik genutzt. Dabei werden bereits vorhandenen Übertragungswege (z.B. Nachrichtenübertragungsnetze, Telefonnetze, Funknetze oder Stromnetze) mehrfach bzw. optimal ausgenutzt, wobei Signale und/oder Daten über eine oder mehrere Trägerfrequenzen zusätzlich auf vorhandene Leitungen moduliert werden. Eine Möglichkeit für eine optimale Ausnutzung wird beispielsweise durch eine so genannte Mehrträgersignalübertragung oder so genannten Multi-Carrier-Modulation ermöglicht.

Bei der Mehrträgersignalübertragung wird ein Übertragungskanal - d.h. ein Übertragungsweg zwischen einer Sende- und einer Empfangseinheit - in mehrere schmalbandige Teilkanäle aufgeteilt, welchen so genannten Trägersignalen bzw. Trägerfrequenzen zugeordnet werden. Soll eine vorliegende Information übertragen werden, so wird diese z.B. in Form von zu übertragenden Bits auf mehrere, unterschiedliche Trägersignale des Übertragungskanals aufgeteilt bzw. aufmoduliert und gleichzeitig über die schmalbandigen Teilkanäle übertragen. Zur Übertragung der Information werden dabei als Informationsträger so genannte Symbole verwendet, welche aus einzeln modulierten Trägersignalen bzw. Trägerfrequenzen zusammengesetzt sind.

Ein Mehrträgersignalübertragungsverfahren ist beispielsweise das Frequenzmultiplexverfahren, bei welchem gleichzeitig mehrere Informationsbits einer Information auf mehrere Trägersignalen verteilt übertragen werden können. Dazu wird eine insgesamt für die Übertragung zur Verfügung stehende Bandbreite (z.B. Frequenzband, Übertragungskanal) in verschiedene, einzelne schmalbandige Frequenzbänder - d.h. in Teilkanäle - unterteilt, welche durch ein kleines, nicht genutztes Schutzband voneinander getrennt sind.

Ein in letzter Zeit immer häufiger genutzte spezielle Implementierung des Frequenzmultiplexverfahrens ist das so genannte orthogonale Frequenzmultiplexverfahren oder Orthogonal Frequency-Division Multiplexing (OFDM). Beim orthogonalen Frequenzmultiplexverfahren werden mehrere orthogonale Träger für die Übertragung von digitalen Daten bzw. Nachrichten verwendet. Jeder Träger wird zunächst separat moduliert und kann eine Information von einem oder mehreren Bits tragen. Von einer Summe aller modulierten Träger bzw. Trägersignale wird dann innerhalb eines zeitlichen Fensters ein Signalverlauf des so genannten Symbols gebildet, wodurch bei dem orthogonale Frequenzmultiplexverfahren eine große Anzahl von Bits parallel übertragen werden können. Ein weiteres Mehrträgersignalübertragungsverfahren ist das so genannte Discrete Multitone Transmission- oder DMT-Verfahren, welches auf denselben Prinzipien wie das orthogonalen Frequenzmultiplexverfahren basiert.

In der Nachrichtentechnik wird eine Einrichtung bzw. eine Infrastruktur zum Übermitteln von Informationen üblicherweise als Kommunikationssystem bezeichnet. Zum Austausch bzw. zum Übermitteln der Informationen und/oder Daten z.B. in Form eines Bitstroms, etc. wird vom Kommunikationssystem eine Kommunikationsverbindung zwischen zumindest einer Sendeeinheit oder Sender und zumindest einer Empfangseinheit oder Empfänger aufgebaut, über welche die Informationen bzw. Daten in Form von aus Informationseinheiten bestehenden Folgen über einen Übertragungskanal übertragen werden. Diese Informationseinheiten werden bei einer digitalen Informationsübertragung auch als Symbole bezeichnet.

Zum Aufbau einer Kommunikationsverbindung ist es weiterhin notwendig, empfängerseitig ein Raster wiederzuerkennen, in welchem die vom Sender ausgesandten Informationseinheiten bzw. Symbole ankommen. Das bedeutet, dass von einer Empfangseinheit eine Taktfrequenz, mit welcher Symbole von der Sendeeinheit ausgesendet werden, erkannt werden muss. Dieses Erkennen und Abstimmen auf die Taktfrequenz des Senders durch die Empfangseinheit wird auch als Synchronisation bezeichnet. Wird dann von Sende- und Empfangseinheit die gleiche Taktfrequenz verwendet, so verarbeiten Sender und Empfänger die zu übertragenden bzw. zu empfangenden Informationseinheiten bzw. Symbole und/oder Signale synchron oder quasisynchron zueinander (d.h. mit einer zulässigen Abweichung in der Synchronität). Da im Regelfall eine Periode der zu übertragenden Symbole bekannt ist, kann sich die Synchronisation der Empfangseinheit beispielsweise darauf beschränken einen Anfangszeitpunkt oder bei Mehrträgersignalübertragung eine Anfangsphase z.B. einer Informations- oder Datenübertragung zu erkennen.

Zur Synchronisation von Sende- und Empfangseinheiten in der Nachrichtentechnik werden beispielsweise vor einer Informations- oder Datenübertragung spezielle Signale und/oder Symbole wie z.B. eine Folge von Pilottönen, Chirp-Signale oder Trainingssymbole genutzt. Dabei ist z.B. ein Pilotton ein Signal - in der Regel eine einzelne Frequenz, welches außerhalb und unabhängig vom eigentlichen Nutzsignal über den Übertragungskanal gesendet wird. Diese speziellen Signale und/oder Symbole werden nach einem Einschalten der Sendeeinheit, bei einem neuerlichen Verbindungsaufbau, kurz vor einer Informationsübertragung, etc. von der Sendeeinheit ausgesendet. Von einer Empfangseinheit können diese speziellen Signale (z.B. Pilottöne, Chirp-Signale, etc.) detektiert und erkannt werden. Die Empfangseinheit kann aus dem Empfang dieser speziellen Signale und/oder Symbole z.B. einen Anfangszeitpunkt bzw. eine Anfangsphase einer Informationsübertragung ableiten, um die ankommenden Informationseinheiten bzw. Symbole entsprechend erkennen zu können bzw. den Raster, in welchem die Informationseinheiten bzw. Symbole ankommen, feststellen zu können.

Die Verwendung der speziellen Signale wie z.B. von Pilottönen oder Chirp-Signalen hat allerdings den Nachteil, dass eine Synchronisation beispielsweise aufgrund von Störungen und/oder Kanalverzerrungen relativ lange Synchronisationssequenzen wie z.B. Folgen von Pilottönen, etc. ausgesendet werden müssen. Dadurch kann die Synchronisation der Empfangseinheit gegebenenfalls eine relativ lange Zeitdauer in Anspruch nehmen und gegebenenfalls empfängerseitig mit einem hohen Speicherbedarf und/oder großem Rechenaufwand verbunden sein. Beim Einsatz von Chirp-Signalen, bei welchen sich die Signalfrequenz zeitlich ändert, ist durch die zeitliche Änderungen der Signalfrequenz keine Einschränkung bzw. Adaption auf ausgewählte Frequenzbänder des Übertragungskanal möglich, wodurch es z.B. zu Störungen auf anderen Frequenzbändern des Übertragungskanals kommen kann. Weiterhin kann bei einer Nutzung von speziellen Signalen bzw. Symbolen (z.B. Pilottönen, Chirp-Signalen, Trainingssymbolen) beispielsweise keine Zusatzinformation vor und während der Synchronisation bzw. vor einem Synchronisationszeitpunkt an die Empfangseinheit übermittelt werden - d.h. bevor der Empfänger mit der Sendeeinheit bzw. auf das vom Sender ausgesendete Signal synchronisiert ist.

Aus der Schrift WO2016/015782 A1 ist ein Verfahren für eine Signalisierung von Sub-Band-Allokationsinformation über einen Träger in einem Mehrträger-Kommunikationssystem bekannt. Dabei bilden eine Mehrzahl an Subbändern ein fragmentiertes Spektrum und es wird zwischen einem Endgerät und einer Basisstation einen Synchronisation über einen Übertragungskanal, wie z.B. eine Luftschnittstelle eines Mobilfunknetzes, durchgeführt. Dazu werden spezielle Synchronisationssequenzen verwendet, welche mittels Autokorrelation gefolgt von einer Kreuzkorrelation detektiert werden, um eine Synchronisation herzustellen und um gleichzeitig eine signalisierte Sub-Band-Allokation durchzuführen.

Weiterhin ist aus der Schrift US 2014/334478 A1 ein Verfahren und auch ein System zur Detektion von Charakteristika, wie z.B. Trägertyp, Trägermodus, etc., eines Trägersignals in einem zellulären Netzwerk bekannt, welches von einem Funkzugangsknoten des Netzwerks übertragen wird. In diesem Trägersignal werden beispielsweise ein Signal zur Synchronisation und Zellidentifikation und ein Signal für andere Funktionen übertragen, wobei allerdings aus diesen Signalen keine senderspezifische Information herauslesbar ist.

Aus der Schrift WO 99/52252 ist ebenfalls ein Verfahren zur digitalen Übertragung von Daten in einem Kommunikationsnetz bekannt, bei welchem innerhalb einer festgelegten Bandbreite eines Kanals eine steuernde Kommunikation von einer Masterstation zur allen Teilnehmern mit Hilfe eines festgelegten Signalrahmens erfolgt. Der Beginn dieses Signalrahmens ist durch ein spezielles, von den Teilnehmer der Bandbreite detektierbares Rahmensynchronisationssignal gekennzeichnet, wobei als Rahmensynchronisationssignal eine Belegung von zumindest einem Teilbereich der Bandbreite mit Sendesignalen bzw. einen Nichtbelegung zumindest eines komplementären Teilbereichs der Bandbreite mit Sendesignalen verwendet wird.

Weiterhin sind auch aus den EP 2 461 502 A1, US 2013/136063 A1 und US 2004/114551 A1 Verfahren bekannt, bei welchen Synchronisationssignale übertragen und für einen Synchronisation zwischen Sende- und Empfangseinheiten genutzt werden.

## Darstellung der Erfindung

Der Erfindung liegt daher die Aufgabe zugrunde, ein Verfahren zur Synchronisation einer Sendeeinheit mit zumindest einer Empfangseinheit eines Kommunikationssystems bei Mehrträgersignalübertragung anzugeben, durch welches auf einfache Weise eine rasche und genaue Erkennung eines Anfangszeitpunkts bzw. einer Anfangsphase einer Übertragung empfängerseitig ermöglicht wird und bei welchem vor einem Synchronisationszeitpunkt zusätzlich eine Zustandsinformation übertragen werden kann.

Diese Aufgabe wird durch ein Verfahren der eingangs genannten Art mit den Merkmalen gemäß dem unabhängigen Patentanspruch 1 gelöst. Vorteilhafte Ausführungsformen der vorliegenden Erfindung sind in den abhängigen Ansprüchen 2 - 8 beschrieben.

Erfindungsgemäß erfolgt die Lösung der Aufgabe durch ein Verfahren zur Synchronisation von einer Sendeeinheit und zumindest einer Empfangseinheit eines Kommunikationssystems bei Mehrträgersignalübertragung über einen Übertragungskanal. Dabei werden für die Mehrträgersignalübertragung eine Vielzahl von Trägersignalen bzw. Trägerfrequenzen genutzt. Das erfindungsgemäße Verfahren weist dabei die folgenden Schritte auf:

- Erzeugen eines Synchronisationssymbols unter Nutzung vorgegebener Trägerfrequenzen;
- Erzeugen eines Synchronisationssignals durch Modulation des erzeugten Synchronisationssymbols mit einer vorgegebenen Synchronisationsfolge durch die Sendeeinheit, wobei eine zeitliche Dauer des Synchronisationssignals einer Dauer des Synchronisationssymbols multipliziert mit einer Länge der vorgegebene Synchronisationsfolge entspricht;
- wiederholtes Aussenden des Synchronisationssignals durch die Sendeeinheit mit einer vorgebbaren Wiederholungsperiode, wobei das Synchronisationssignal für eine Übertragung einer sendespezifischen Zustandsinformation genutzt wird, und wobei für die Übertragung der sendespezifischen Zustandsinformation eine Veränderung einer Amplitude und/oder einer Polarität des Synchronisationssignals durchgeführt wird;
- nach Übertragung über den Übertragungskanal Empfangen eines Signals durch die Empfangseinheit, wobei das empfangene Signal durch das mit der vorgebbaren Wiederholungsperiode ausgesendete und übertragene Synchronisationssignal gebildet wird; und
- Detektieren und Auswerten des empfangenen Signals mittels eines Detektionsalgorithmus durch die Empfangseinheit, wobei der Detektionsalgorithmus an einen Verzögerungs- und Korrelationsalgorithmus angelehnt ist und wobei durch den Detektionsalgorithmus ein Zeitausschnitt des empfangenen Signals als Synchronisationszeitpunkt derart ermittelt wird, dass in der Empfangseinheit laufend jeweils ein Zeitausschnitt des empfangenen Signals herangezogen wird, dass für den jeweiligen Zeitausschnitt des empfangenen Signals ein jeweiliger mit der vorgegebenen Synchronisationsfolge
- gewichteter Mittelwert als so genanntes, jeweiliges Master-Symbol gebildet wird, dass das jeweilige Master-Symbol mit der vorgegebenen Synchronisationsfolge moduliert und mit dem jeweiligen Zeitausschnitt des empfangenen Signals korreliert wird, und dass ein derart ermittelter Wert als Maß für eine Wahrscheinlichkeit herangezogen und ausgewertet wird, ob im jeweiligen Zeitabschnitt das Synchronisationssignal vorhanden ist.

Der Hauptaspekt des erfindungsgemäßen Verfahrens besteht hauptsächlich darin, dass aufgrund eines relativ kurzen Synchronisationssignals und aufgrund des eingesetzten Detektionsalgorithmus eine relativ rasche und genaue Synchronisation zwischen Sende- und Empfangseinheit mit relativ geringem Speicherbedarf und Rechenaufwand insbesondere auf der Seite der Empfangseinheit erzielt werden kann. Weiterhin weist das erfindungsgemäße Synchronisationsverfahren eine geringe Empfindlichkeit gegenüber Störungen und Kanalverzerrungen auf. Durch eine Erzeugung des Synchronisationssymbols auf Basis vorgegebener Trägerfrequenzen des Übertragungskanals werden gezielt Frequenzbänder für die Synchronisierung genutzt bzw. ungenutzt belassen, um Störungen zwischen Frequenzbändern durch die Synchronisierung zu reduzieren bzw. zu verhindern. Zusätzlich bietet die Verwendung eines speziell für die Synchronisation erzeugten Synchronisationssignals den Vorteil, bereits vor und während der Synchronisation bzw. vor einem Synchronisationszeitpunkt im Empfänger zusätzlich senderspezifische Informationen, wie z.B. einen Zustand des Senders, einen senderseitigen Synchronisationszustand, etc., zu übermitteln. Dadurch werden Fehlalarme, etc. verhindert und der Energiebedarf reduziert.

Weiterhin ist vorgesehen, dass in der Empfangseinheit zum Ermitteln des Synchronisationszeitpunkts laufend jeweils ein Zeitausschnitt eines empfangenen Signals herangezogen wird, dass für den jeweiligen Zeitausschnitt des empfangenen Signals ein jeweiliger mit der vorgegebenen Synchronisationsfolge gewichteter Mittelwert als so genanntes, jeweiliges Master-Symbol gebildet wird, dass das jeweilige Master-Symbol mit der vorgegebenen Synchronisationsfolge wiederholt und mit dem jeweiligen Zeitausschnitt des empfangenen Signals korreliert wird.

Das bedeutet, auf der Empfängerseite wird fortschreitend ein Zeitausschnitt aus dem laufenden, empfangenen Signal für den Detektionsalgorithmus herangezogen. Dabei besteht das empfangene Signal aus dem wiederholt von der Sendeeinheit ausgesendeten Synchronisationssignal.

Idealerweise weisen für die Erzeugung des Synchronisationssymbols im Frequenzbereich die Amplituden der genutzten Trägerfrequenzen einen gleichen Wert, wie z.B. den Wert 1, auf. Die Amplituden der nicht genutzten Trägerfrequenzen des Übertragungskanals werden auf den Wert Null gesetzt. Eine Phase der jeweils für die Erzeugung des Synchronisationssymbols genutzten Trägerfrequenzen wird auf Basis einer ersten, folgenden Formel ermittelt.

$$X_{k(i)} = \begin{cases} e^{j*\pi*i^2}; & i \leq \dfrac{n}{2} \\ e^{j*\pi(n-i)^2}; & i > \dfrac{n}{2} \end{cases}$$

Dabei bezeichnen $X_{k(i)}$ einen komplexwertigen Signalvektor für die jeweils genutzte Trägerfrequenz mit dem Index k, i eine Laufvariable, von welcher die Werte 0 bis n-1 angenommen werden, wobei n eine Gesamtheit der genutzten Trägerfrequenzen angibt, e die Euler' sche Zahl und j die imaginäre Einheit.

Alternativ erfolgt die Ermittlung der Phase der für die Erzeugung des Synchronisationssymbols genutzten Trägerfrequenzen auch aus einer zweiten, folgenden Formel:

$$X_{k(i)} = \begin{cases} e^{j*\frac{\pi}{2}*\lfloor 2i^2\rfloor}; & i \leq \dfrac{n}{2} \\ e^{j*\frac{\pi}{2}*\lfloor 2(n-i)^2\rfloor}; & i > \dfrac{n}{2} \end{cases}$$

Dabei bezeichnen wieder $X_{k(i)}$ einen komplexwertigen Signalvektor für die jeweils genutzte Trägerfrequenz mit dem Index k, i eine Laufvariable, von welcher die Werte 0 bis n-1 angenommen werden, wobei n eine Gesamtheit der genutzten Trägerfrequenzen angibt, e die Euler' sche Zahl und j die imaginäre Einheit.

Bei beiden Berechnungsvarianten für den komplexwertigen Signalvektor $X_{k(i)}$ für das Synchronisationssymbol wird ein niedriger Crest-Faktor erzielt, wobei der Crest-Faktor bei Ermittlung nach der ersten Formel geringfügig niedriger ist als bei Ermittlung nach der zweiten Formel. Die zweite Formel weist allerdings eine einfachere Realisierung sowie eine geringeren Rechenaufwand als die erste Formel auf. Eine Berechnung des Synchronisationssymbols auf Basis einer der beiden Formeln ermöglicht eine erhebliche Verbesserung der Signalleistung bei der Übertragung als bei einem für eine Datenübertragung genutzten Symbol und damit zu einem besseren Signal-Rauschverhältnis bei der Empfangseinheit. D.h. das auf dem derart ermittelten Synchronisationssymbol basierende Synchronisationssignal ist besser und rascher auf der Empfängerseite detektierbar.

Eine bevorzugte Ausgestaltung des erfindungsgemäßen Verfahrens sieht vor, dass als Mehrträgersignalübertragung ein so genanntes orthogonales Frequenzmultiplexverfahren bzw. OFDM-Verfahren oder eine so genannte Discrete Multitone Transmission-Verfahren bzw. DMT-Verfahren genutzt wird, und dass als Synchronisationssymbol entsprechend ein OFDM-Symbol oder ein DMT-Symbol verwendet wird.

Es ist günstig, wenn als vorgegebene Synchronisationsfolge zur Modulation des Synchronisationssymbols eine Codefolge mit geeigneten Autokorrelationseigenschaften in einer zugehörigen Autokorrelationsfunktion verwendet wird. D.h. die als vorgegebene Synchronisationsfolge genutzte Codefolge - wie z.B. ein so genannter Barker-Code - weist in der zugehörigen periodischen oder aperiodischen Autokorrelationsfunktion minimale Nebenmaxima oder "Nebenzipfel" bzw. "Sidelobes" auf. Der Barker-Code der Länge 11 weist beispielsweise eine Autokorrelationsfunktion mit einem sehr scharfen Maximum und 10 relativ kleinen Nebenmaxima (z.B. um einen Faktor 11:1 kleiner) auf. Zum Erzeugen des Synchronisationssignals wird das Synchronisationssymbol mehrfach-wiederholt - d.h. in der Anzahl der Codelänge/Codeelemente - ausgesendet und das Synchronisationssymbol durch das jeweilige Codeelement entsprechend verändert oder moduliert. Das Synchronisationssignal weist damit eine zeitliche Dauer des Synchronisationssymbols multipliziert mit der Länge der vorgegebenen Codefolge bzw. der Anzahl der Codeelemente auf. Durch eine Verwendung einer Codefolge mit entsprechend geeigneten Autokorrelationseigenschaften, wie z.B. des Barker-Codes, wird das Synchronisationssignal durch einen Detektionsalgorithmus besonders stark hervorgehoben. D.h. das Synchronisationssignal wird in der Empfangseinheit nach einer an das Signal angepassten Filterung ("matched filter") als Hauptmaximum bzw. Hauptzipfel in der Autokorrelationsfunktion des Synchronisationssignals hervorgehoben. Das Synchronisationssignal ist daher leicht detektierbar und sehr genau erkennbar.

Eine zweckmäßige Ausgestaltung sieht vor, dass die sendespezifische Zustandsinformation durch wiederholtes Aussenden des Synchronisationssignals und/oder Modulation der vorgebbaren Wiederholungsperiode des Synchronisationssignals übertragen wird. Dazu werden für eine Signalisierung bestimmter senderspezifischer Zusatzinformationen beispielsweise unterschiedlich lange Pausen zwischen die Wiederholungen des Synchronisationssignals eingefügt. Damit kann auf sehr einfache Weise unterschiedliche Zustandsinformationen noch vor und während der Synchronisierung der Empfangseinheit mitgeteilt werden.

Es ist dabei günstig, wenn als sendespezifische Zustandsinformation eine Zustandsinformation der Sendeeinheit und/oder eine Information über einen Synchronisationszustand der Sendeeinheit übertragen werden. So wird der Empfangseinheit z.B. angezeigt, ob die Sendeeinheit bereits zum Übertragen von Daten/Informationen bereit ist oder die zu sendenden Daten beispielsweise noch nicht zur Verfügung stehen oder die Sendeeinheit noch nicht parametriert ist, etc. Auf diese Weise werden sehr einfach empfängerseitige Fehlalarme, etc. vermieden.

Es ist weiterhin günstig, wenn als Länge des Zeitausschnitts, der vom dem empfangenen Signal für den Detektionsalgorithmus herangezogen wird, die Länge eines Synchronisationssignals gewählt wird. Dann wird für jeden herangezogenen Zeitausschnitt das zugehörige Mastersymbol ermittelt und jeder Zeitausschnitt mittels Korrelation mit dem mit der vorgegebenen Synchronisationsfolge wiederholten, zugehörigen Mastersymbol auf das Vorhandensein des Synchronisationssignals überprüft. Damit wird auf einfache Weise - d.h. ohne großen Speicherbedarf und Rechenaufwand auf der Empfängerseite - sehr rasch und genau ein Synchronisationszeitpunkt mit hoher Wahrscheinlichkeit ermittelt.

Die folgenden Aspekte eines frequenzselektives Verhalten sind nicht erfindungsgemäß und dienen lediglich der Veranschaulichung. Für ein frequenzselektives Verhalten kann das empfangene Signal vor einer Verarbeitung und Auswertung in der Empfangseinheit vorteilhafterweise mittels eines Bandfilters von nicht genutzten Frequenzbändern bereinigt werden. Alternativ kann das frequenzselektive Verhalten auch erzeugt werden, indem Samplewerte der jeweiligen Zeitausschnitte mittels einer Fast-Fourier-Transformation in den Frequenzbereich transformiert werden. Dann erfolgt eine Selektion durch Auswahl der vorgegebenen bzw. für die senderseitige Erzeugung des Synchronisationssymbols genutzten Trägerfrequenzen. Diese Methode weist allerdings einen wesentlich höheren Rechneraufwand auf.

Zweckmäßigerweise werden durch einen empfängerseitigen Vergleich eines Referenzsymbols, welches dem gesendeten Synchronisationssymbol entspricht, mit jenem Master-Symbol, bei welchem mit hoher Wahrscheinlichkeit der Synchronisierungszeitpunkt detektiert worden ist, eine Amplitudendämpfung und/oder eine Phasendrehung des Übertragungskanals abgeschätzt. Dazu wird von der Empfangseinheit auf Basis der vorgegebenen Trägerfrequenzen, welche bereits für die Erzeugung des Synchronisationssymbols von der Sendeeinheit genutzt wurden, das Referenzsymbol berechnet, welches im Prinzip dem Synchronisationssymbol entspricht. Durch die Abschätzung der Amplitudendämpfung und/oder Phasendrehung des Übertragungskanals können dann sehr einfach Korrekturfilter berechnet und/oder eine Korrektur der empfangenen Trägersignale/Trägerfrequenzen empfängerseitig durchgeführt werden.

## Kurzbeschreibung der Zeichnung

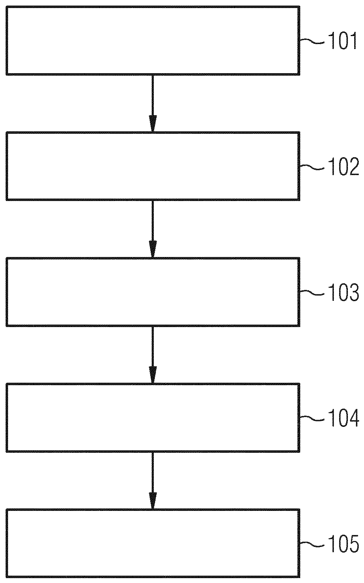

Die Erfindung wird nachfolgend in beispielhafter Weise anhand der beigefügten Figur 1 erläutert. Figur 1 zeigt dabei schematisch einen beispielhaften Ablauf des erfindungsgemäßen Verfahrens zur Synchronisation zwischen einer Sendeeinheit und zumindest einer Empfangseinheit eines Kommunikationssystems bei Mehrträgersignalübertragung.

## Ausführung der Erfindung

Figur 1 zeigt schematisch einen beispielhaften Ablauf des Verfahrens zur Synchronisation zwischen einer Sendeeinheit und zumindest einer Empfangseinheit bei einer Mehrträgersignalübertragung. Dabei werden von der Sendeeinheit Informationen und/oder Daten über einen Übertragungskanal an zumindest eine Empfangseinheit mittels Mehrträgersignalübertragungsverfahren wie z.B. orthogonalem Frequenzmultiplexverfahren (kurz: OFDM) oder Discrete Multitone Transmission-Verfahren (kurz: DMT-Verfahren) übertragen. Ein übertragenes Signal besteht dabei aus einer zeitlichen Abfolge an Symbolen als Informationseinheit oder Träger für die zu übertragenden Informationen bzw. Daten, wobei die Symbole auf Basis von einer Vielzahl von Trägerfrequenzen des Übertragungskanals gebildet werden. Zum Aufbau einer Kommunikationsverbindung zwischen der Sendeeinheit und der zumindest einen Empfangseinheit ist eine Synchronisation notwendig, damit empfängerseitig ein Raster erkannt wird, in welchem die Informationseinheiten bzw. Symbole ankommen und es zu keinen Fehlern bei der Detektion und Auswertung der übertragenen Informationen und/oder Daten kommt.

Als Übertragungsmedium zwischen Sende- und Empfangseinheit wird beispielsweise eine vorhandene Infrastruktur wie z.B. Nachrichtenübertragungsnetze, Funknetze, Telefonnetze oder Stromnetze - d.h. vorhandene, elektrische Leitungen im Niederspannungsbereich und/oder Freileitungen im Hoch- und Mittelspannungsbereich - genutzt. Bei einem Informationsaustausch über Hoch- und/oder Mittelspannungs-Freileitungen werden z.B. Trägerfrequenzanlagen in einem Frequenzbereich zwischen 30kHz und 500 kHz bzw. in manchen Regionen bis einige MHz verwendet, wobei dieser Informationsaustausch auch als Trägerfrequenz-Nachrichtenübertragung über Hochspannungsleitungen oder TFH-Kommunikation bezeichnet wird. Eine Nutzung von vorhandenen, elektrischen Leitungen im Niederspannungsnetz zum Informationsaustausch wird als Power-Line-Communication oder PLC bezeichnet, wobei es sich bei PLC-Vorrichtungen und -Systeme technisch gesehen ebenfalls um Trägerfrequenzanlagen handelt.

Beim erfindungsgemäßen Verfahren wird in einem ersten Verfahrensschritt 101 von der Sendeeinheit ein Synchronisationssymbol unter Nutzung vorgegebener Trägerfrequenzen des Übertragungskanals erzeugt. Bei Verwendung des OFDM-Verfahrens oder des DMT-Verfahrens wird das Synchronisationssymbol als OFDM- bzw. DMT-Symbol generiert.

Für eine bessere Ausnutzung einer Signalverstärkung der Sendeeinheit bzw. einen besseren und genaueren Detektion auf der Empfängerseite wird danach getrachtet, ein Synchronisationssymbol mit einem niedrigen Crest-Faktor bzw. Scheitelfaktor zu erzeugen. Weiterhin ist es wichtig, das Synchronisationssymbol auf die vorgegebenen bzw. zulässigen Trägerfrequenzen des Übertragungskanals zu begrenzen. Daher wird das Synchronisationssymbol senderseitig im Frequenzbereich erzeugt, wodurch eine Einschränkung auf die vorgegebenen bzw. gewünschten Trägerfrequenzen bzw. Frequenzbänder ermöglicht wird.

Für die Erzeugung des Synchronisationssymbols im ersten Verfahrensschritt 101 wird dazu eine Amplitude der jeweils der verwendeten bzw. vorgegebenen Trägerfrequenzen mit einem Wert, insbesondere mit dem Wert 1, belegt. D.h. die Amplituden der genutzten Trägerfrequenzen weisen alle den gleichen Wert wie z.B. den Wert 1 auf. Bei nicht genutzten bzw. nicht zulässigen Trägerfrequenzen wird die zugehörige Amplitude mit dem Wert Null belegt, wodurch das erzeugte Synchronisationssymbol auf die vorgegebenen Trägerfrequenzen begrenzt wird.

Die zugehörigen Phasen für die jeweils für das Synchronisationssymbol vorgegebenen bzw. genutzten Trägerfrequenzen können beispielsweise auf Basis einer ersten Formel (1) ermittelt werden:

$$(1) \quad X_{k(i)} = \begin{cases} e^{j*\pi*i^2}; & i \le \frac{n}{2} \\ e^{j*\pi(n-i)^2}; & i > \frac{n}{2} \end{cases}$$

Dabei bezeichnen $X_{k(i)}$ einen komplexwertigen Signalvektor für die jeweils genutzte Trägerfrequenz mit dem Index k, i eine Laufvariable, von welcher die Werte 0 bis n-1 angenommen werden, wobei n eine Gesamtheit der genutzten Trägerfrequenzen angibt, e die Euler'sche Zahl und j die imaginäre Einheit.

Alternativ können die Phasen für die jeweiligen Trägerfrequenzen, welche zur Erzeugung des Synchronisationssymbols verwendet werden, auch aus einer zweiten Formel (2) abgeleitet werden:

$$(2) \quad X_{k(i)} = \begin{cases} e^{j*\frac{\pi}{2}*\lfloor 2i^2 \rfloor}; & i \le \frac{n}{2} \\ e^{j*\frac{\pi}{2}*\lfloor 2(n-i)^2 \rfloor}; & i > \frac{n}{2} \end{cases}$$

Dabei bezeichnen wieder $X_{k(i)}$ einen komplexwertigen Signalvektor für die jeweils genutzte Trägerfrequenz mit dem Index k, i eine Laufvariable, von welcher die Werte 0 bis n-1 angenommen werden, wobei n eine Gesamtheit der genutzten Trägerfrequenzen angibt, e die Euler'sche Zahl und j die imaginäre Einheit.

Dabei ist der Crest-Faktor des Synchronisationssymbols, welches sich aus der ersten Formel (1) ergibt, geringfügig niedriger als der Crest-Faktor des Synchronisationssymbols, welches aus der zweiten Formel (2) ermittelbar ist. Allerdings liegt in beiden Fällen der Crest-Faktor unter einem Wert 3 und stellt damit eine Verbesserung gegenüber einem üblichen Crest-Faktor dar, welcher beispielsweise bei einer Datenübertragung mittels OFDM-Symbolen einen Wert von 6 aufweist. D.h. bei einem gemäß nach einer der beiden Formeln (1) oder (2) erzeugte Synchronisationssymbol wird eine Verbesserung bei der Übertragung (z.B. von 6dB) bzw. eine höhere Sendeleistung (z.B. um das 4-fache) als bei der Übertragung von Informationen und/oder Daten über den Übertragungskanal erzielt. Das führt zu einem besseren Signal-Rauschverhältnis bei der Empfängereinheit und damit zu einer rascheren und besseren Detektierbarkeit eines Synchronisationssignals auf der Empfängerseite.

In einem zweiten Verfahrensschritt 102 wird von der Sendeeinheit das Synchronisationssignal auf Basis des im ersten Verfahrensschritt 101 erzeugten Synchronisationssymbols erzeugt. Dazu wird das Synchronisationssymbol mit einer vorgegebenen Synchronisationsfolge moduliert. Als vorgegebene Synchronisationsfolge wird eine Codefolge mit geeigneten Autokorrelationseigenschaften in der aperiodischen oder periodischen Autokorrelationsfunktion verwendet wie minimale Nebenmaxima bzw. "Nebenzipfel" oder "sidelobes" in der aperiodischen oder periodischen Autokorrelationsfunktion - wie z.B. ein so genannter Barker-Code.

Bei der konkreten Ausführung des erfindungsgemäßen Verfahrens wird beispielsweise ein Barker-Code mit der Länge 11 eingesetzt, welcher in der folgenden Tabelle 1 dargestellt ist. Dabei wird durch i einen Laufvariable von 0 bis 10 und durch $b_i$ das jeweilige i-te Codeelement des Barker-Codes bezeichnet.

Tabelle 1

| i | 0 | 1 | 2 | 3 | 4 | 5 | 6 | 7 | 8 | 9 | 10 |
|-------|----|----|----|----|----|----|----|----|----|----|----|
| $b_i$ | +1 | +1 | +1 | -1 | -1 | -1 | +1 | -1 | -1 | +1 | -1 |

Die Autokorrelationsfunktion des in Tabelle 1 dargestellten Barker-Codes mit der Länge 11 weist beispielsweise ein sehr scharfes Maximum sowie 10 Nebenmaxima oder Nebenzipfel auf, welche z.B. um den Faktor 11:1 kleiner und gegebenenfalls negativ sind. Damit ist eine sehr genaue Erkennung eines Synchronisationszeitpunkts auf der Empfängerseite möglich.

Die Erzeugung des Synchronisationssignals im zweiten Verfahrensschritt 102 erfolgt nun durch Modulation des Synchronisationssymbols mit der vorgegebenen Synchronisationsfolge. Das bedeutet beispielsweise bei Verwendung des oben dargestellten Barker-Codes, dass das Synchronisationssymbol zur Erzeugung des Synchronisationssignals 11-mal versehen mit dem entsprechenden Vorzeichen des Barker-Codes aneinandergereiht und dann von der Sendeeinheit im dritten Verfahrensschritt 103 ausgesendet wird.

Das so erzeugte Synchronisationssignal weist eine zeitliche Dauer auf, welcher einer Dauer des Synchronisationssymbols multipliziert mit der jeweiligen Codelänge entspricht. Bei Verwendung des Barker-Codes mit der Länge 11 entspricht die zeitliche Dauer des Synchronisationssignals beispielsweise der 11-fachen Länge des Synchronisationssymbols, wobei sich die einzelnen Synchronisationssymbole nur im Vorzeichen unterscheiden. Für einen Einsatz von komplexwertigen Codefolgen wie z.B. einer Zadoff-Chu-Folge - einer komplexwertigen, mathematischen Folge mit konstanter Amplitude und einer periodischen Autokorrelation mit Nebenmaxima bzw. Nebenzipfeln gleich Null - ist zusätzlich eine Verwendung von Phasen-Amplituden-Modulation der einzelnen Träger in den Symbolen möglich. Weiterhin werden vom Synchronisationssignal nur die vorgegebenen Trägerfrequenzen bzw. Frequenzbänder belegt. Andere Trägerfrequenzen des Übertragungskanals werden durch das Synchronisationssignal nicht gestört.

Im dritten Verfahrensschritt 103 wird das im zweiten Verfahrensschritt 102 erzeugte Synchronisationssignal von der Sendeeinheit ausgesendet. D.h. das Synchronisationssignal, welches aus einer durch die vorgegebene Synchronisationsfolge modulierten Anzahl an Synchronisationssymbolen besteht, wird wiederholt mit einer vorgegebenen Wiederholungsperiode ausgesendet. Dabei kann das Synchronisationssignal für eine Übertragung einer senderspezifischen Zustandsinformation an die zumindest einen Empfangseinheit genutzt werden.

Als senderspezifische Zustandsinformation kann beispielsweise eine Zustandsinformation der Sendeeinheit wie z.B. Sender bereit zum Senden, Sender hat noch keine Daten, Sender ist noch nicht parametriert, etc. und/oder eine Information über eine Synchronisationszustand wie z.B. erste Synchronisation nach Hochfahren des Senders, Synchronisationsverlust, etc. übertragen werden.

Die sendespezifische Zustandsinformation kann dabei beispielsweise durch wiederholtes Aussenden des Synchronisationssignals bzw. durch eine Veränderung oder Modulation der vorgegebenen Wiederholungsperiode des Synchronisationssignals übertragen werden. Dazu kann beispielsweise die vorgegebene Wiederholungsperiode des Synchronisationssignals für eine erste Zustandsinformation auf die Länge/Dauer des Synchronisationssignals gesetzt werden. Eine zweite, dritte oder weitere Zustandsinformation kann dann beispielsweise durch Änderung der vorgegebenen Wiederholungsperiode übertragen werden - es werden z.B. Pausen mit definierter Länge zwischen dem wiederholten Aussenden des Synchronisationssignals in ein zu übertragendes Signal eingefügt. Diese Pausen können beispielsweise die Länge von der Dauer eines Synchronisationssymbols aufweisen.

Alternativ kann für eine Übertragung der sendespezifischen Zusatzinformation eine Veränderung einer Amplitude und/oder einer Polarität des Synchronisationssignals oder eine Veränderung des Synchronisationssignals an sich durchgeführt werden.

In einem vierten Verfahrensschritt 104 wird ein von der Sendeeinheit erzeugtes Synchronisationssignal laufend als Signal über den Übertragungskanal übertragen und von der zumindest einen Empfangseinheit empfangen. Das von der Empfangseinheit empfangene Signal wird dabei durch das von der Sendeeinheit erzeugte und mit der vorgegebenen Wiederholungsperiode ausgesendete gebildet und kann durch den Übertragungskanal verzerrt, gedämpft und/oder durch Störungen beeinflusst sein.

In einem fünften Verfahrensschritt 105 wird dann auf der Empfängerseite das empfangene Signal mittels eines Detektionsalgorithmus insbesondere auf ein Vorhandensein des Synchronisationssignals detektiert und ausgewertet. Dabei wird durch den Detektionsalgorithmus, welcher an einen Verzögerungs- und Korrelationsalgorithmus angelehnt ist, ein Zeitausschnitt des empfangenen Signals bzw. dessen zeitliche Position als Synchronisationszeitpunkt ermittelt, in welchem mit einer hohen Wahrscheinlichkeit das Synchronisationssignal enthalten ist.

Dazu wird im fünften Verfahrensschritt 105 in der zumindest einen Empfangseinheit laufend jeweils ein Zeitausschnitt des empfangenen Signals herangezogen. Als Länge des jeweiligen Zeitausschnitts des empfangenen Signals wird dabei idealerweise die Länge des erwarteten Synchronisationssignals - z.B. die 11-fache Dauer des Synchronisationssymbols - gewählt. Jeder herangezogene Zeitausschnitt wird dann mittels des Detektionsalgorithmus auf Vorhandensein des Synchronisationssignals geprüft. Eine Schrittweite der Zeitausschnitte kann beispielsweise genau einem Sample entsprechen. Um z.B. Rechenaufwand auf der Empfängerseite einzusparen, können allerdings auch mehrere Samples übersprungen werden - so kann beispielsweise die Detektion auch nur alle 32 Samples erfolgen. D.h. es wird nicht jeder mögliche Zeitausschnitt digitalisiert ausgewertet bzw. für jeden möglichen Zeitausschnitt eine Berechnung der Korrelationen durchgeführt, da sich die Zeitausschnitte bei einer Schrittweite von einem Sample beinahe annähernd überdecken.

Um das Vorhandensein des Synchronisationssignals mit hoher Wahrscheinlichkeit feststellen zu können, wird für jeden herangezogenen Zeitausschnitt des empfangenen Signals ein mit der vorgegebenen Synchronisationsfolge

gewichteter Mittelwert als so genanntes Master-Symbol dieses Zeitausschnitts gebildet. So wird z.B. für die Bildung des gewichteten Mittelwerts eines Zeitausschnitts bzw. des entsprechenden Master-Symbols zur Gewichtung der Barker-Code mit der Länge 11 herangezogen, wenn für das Erzeugen des Synchronisationssignals der Barker-Code mit der Länge 11 verwendet wurde. Das entsprechende Master-Symbol kann gemäß einer dritten Formel (3) ermittelt werden:

$$(3) \qquad s_{m,n} = \sum_{i=0}^{L-1} b_i * z_{n+m+i*N_g}$$

Dabei bezeichnen:

- $s_{m,n}$ ein Sample des Master-Symbols zum Zeitpunkt n des m-ten Zeitausschnitts
- L eine Länge der vorgegebenen Synchronisationsfolge - z.B. L = 11 beim Barker-Code der Länge 11
- $b_i$ Codeelement der vorgegebenen Synchronisationsfolge (z.B. Barker-Code) an der i-ten Stelle
- $z_n$ Sample zum Zeitpunkt n des m-ten Zeitausschnitts
- $N_g$ eine Gesamtlänge der Synchronisationssymbole bzw. des Synchronisationssignals (inklusive zyklischer Verlängerung für die Übertragung der senderspezifischen Zustandsinformation)
- i, n und m sind dabei Laufvariablen für die Nummerierung der Codeelemente, der Samples und der Zeitauschnitte

Das jeweils ermittelte Master-Symbol wird mit der vorgegebenen Codefolge (z.B. mit dem Barker-Code der Länge 11) moduliert (z.B. mit wechselnden Vorzeichen entsprechend dem als vorgegebener Codefolge verwendeten Barker-Code der Länge 11 wiederholt) und eine Korrelation mit dem gesamten, für die Berechnung des jeweiligen Master-Symbols herangezogenen Zeitausschnitt durchgeführt. Ein so ermittelter Wert $w_m$ ist ein Maß für die Wahrscheinlichkeit, dass im herangezogenen Zeitausschnitt das Synchronisationssignal anwesend ist.
Dies kann beispielsweise mittels einer vierten Formel (4) erfolgen:

$$(4) \qquad w_m = \sum_{n=0}^{N-1} \sum_{k=0}^{L-1} z_{n+m+k*N_g} * b_k * \sum_{i=0}^{L-1} b_i * z_{n+m+i*N_g} =$$

$$= \sum_{n=0}^{N-1} \sum_{k=0}^{L-1} z_{n+m+k*N_g} * b_k * s_{m,n}$$

Dabei bezeichnen:

- $w_m$ ein Maß für die Wahrscheinlichkeit der Anwesenheit des Synchronisationssignals im m-ten Zeitabschnitt
- $s_{m,n}$ ein Sample des Master-Symbols zum Zeitpunkt n des m-ten Zeitausschnitts
- N eine Symbollänge
- L eine Länge der vorgegebenen Synchronisationsfolge - z.B. L = 11 beim Barker-Code der Länge 11
- $b_k$ Codeelement der vorgegebenen Synchronisationsfolge (z.B. Barker-Code) an der k-ten Stelle
- $b_i$ Codeelement der vorgegebenen Synchronisationsfolge (z.B. Barker-Code) an der i-ten Stelle
- $z_n$ Sample zum Zeitpunkt n des m-ten Zeitausschnitts
- $N_g$ eine Gesamtlänge der Synchronisationssymbole bzw. des Synchronisationssignals (inklusive zyklischer Verlängerung für die Übertragung der senderspezifischen Zustandsinformation)
- i, k, n und m sind dabei Laufvariablen für die Nummerierung der Codeelemente, der Samples und der Zeitauschnitte

Die vierte Formel (4) kann durch Umformung zu einer fünften Formel (5) vereinfacht werden, um mit geringen Rechenaufwand das Maß $w_m$ für die Wahrscheinlichkeit, dass im herangezogenen Zeitausschnitt das Synchronisationssignal anwesend ist, empfängerseitig zu bestimmen.

(5)

$$w_m = \sum_{n=0}^{N-1} \left( \sum_{k=0}^{L-1} b_k * z_{n+m+k*N_g} \right)^2 = \sum_{n=0}^{N-1} s_{m,n}^2$$

$w_m$ als Ergebnis des Detektionsalgorithmus kann beispielsweise als Kurvenverlauf ausgewertet werden und weist im Idealfall ein scharf begrenztes Maximum auf, durch welches ein Synchronisationszeitpunkt mit hoher Wahrscheinlichkeit markiert wird.

Für ein frequenzselektives Verhalten kann das empfangene Signal beispielsweise vorher mittels eines Bandfilters von nicht genutzten Trägerfrequenzen bereinigt werden. Alternativ kann zum Erzeugen des frequenzselektiven Verhaltens auch eine Fast-Fourier-Transformation der Samplewerte $z_n$ des jeweiligen Zeitausschnitts in den Frequenzbereich gemäß einer sechsten Formel (6) genutzt werden, wobei $Z_{l,m}$ eine Fourier-Transformierte von des Samples $z_{m+n}$ ist.

(6)

$$w_m = \sum_{i=0}^{n-1} \left| \sum_{k=0}^{L-1} b_k * Z_{l(i),m+k*N} \right|^2$$

Eine Selektion wird dabei durch eine Auswahl der verwendeten n Trägerfrequenzen durchgeführt. Diese Methode der Frequenzselektion ist allerdings mit einem relativ hohen Rechenaufwand verknüpft.

Weiterhin kann im fünften Verfahrensschritt 105 durch einen empfängerseitigen Vergleich eines Referenzsymbols mit jenem Master-Symbol, bei welchem mit hoher Wahrscheinlichkeit der Synchronisationszeitpunkt festgestellt worden ist, eine Amplitudendämpfung und/oder eine Phasendrehung des Übertragungskanals bzw. einen Kanalverzerrung abgeschätzt werden. Als Referenzsymbol wird in der Empfängereinheit beispielsweise das Synchronisationssymbol ermittelt und eingesetzt, da sowohl die dafür vorgegebenen Trägerfrequenzen als auch die Ermittlungsweise bekannt sind. Durch die Abschätzung von Amplitudendämpfung und/oder Phasendrehung kann empfängerseitig auf sehr einfache Weise ein Korrekturfilter ermittelt werden bzw. eine Korrektur der genutzten bzw. empfangenen Trägerfrequenzen durchgeführt werden. Korrekturwerte für die einzelnen Trägerfrequenzen können beispielsweise nach einer siebten Formel (7) bestimmt werden:

$$(7) \quad H_k = \frac{L*X_k}{S_k}$$

Dabei ist $H_k$ der Korrekturwert der jeweiligen Trägerfrequenz und $S_k$ eine Fourier-Transformierte von $s_{m,n}$ für einen Zeitpunkt m, bei welchem das Maximum von $w_m$ detektiert wurde.

**Patentansprüche**

1. Verfahren zur Synchronisation zwischen einer Sendereinheit und zumindest einer Empfangseinheit bei Mehrträgersignalübertragung über einen Übertragungskanal, wobei bei der Mehrträgersignalübertragung eine Vielzahl von Trägerfrequenzen für eine Signalübertragung genutzt werden, wobei die folgenden Schritte umfasst werden:

   - Erzeugen eines Synchronisationssymbols unter Nutzung vorgegebener Trägerfrequenzen (101) im Frequenzbereich;
   - Erzeugen eines Synchronisationssignals durch Modulation des erzeugten Synchronisationssymbols mit einer vorgegebenen Synchronisationsfolge durch die Sendeeinheit (102), wobei eine zeitliche Dauer des Synchronisationssignals einer Dauer des Synchronisationssymbols multipliziert mit einer Länge der vorgegebenen Synchronisationsfolge entspricht;
   - Aussenden des Synchronisationssignals durch die Sendeeinheit mit einer vorgebbaren Wiederholungsperiode (103), wobei das Synchronisationssignal für eine Übertragung einer sendespezifischen Zustandsinformation genutzt wird, und wobei für die Übertragung der sendespezifischen Zustandsinformation eine Veränderung einer Amplitude und/oder einer Polarität des Synchronisationssignals durchgeführt wird;
   - nach Übertragung über den Übertragungskanal Empfangen eines Signals durch die Empfangseinheit (104), wobei das empfangene Signal durch das mit der vorgebbaren Wiederholungsperiode wiederholt ausgesendete Synchronisationssignal gebildet wird; und

- Detektieren und Auswerten des empfangenen Signals mittels eines Detektionsalgorithmus, welcher an einen Verzögerungs- und Korrelationsalgorithmus angelehnt ist, durch die Empfangseinheit, wobei durch den Detektionsalgorithmus ein Zeitausschnitt des empfangenen Signals als Synchronisationszeitpunkt derart ermittelt wird, dass in der Empfangseinheit laufend jeweils ein Zeitausschnitt des empfangenen Signals herangezogen wird, dass für den jeweiligen Zeitausschnitt des empfangenen Signals ein jeweiliger mit der vorgegebenen Synchronisationsfolge gewichteter Mittelwert als so genanntes, jeweiliges Master-Symbol gebildet wird, dass das jeweilige Master-Symbol mit der vorgegebenen Synchronisationsfolge moduliert und mit dem jeweiligen Zeitausschnitt des empfangenen Signals korreliert wird, und dass ein derart ermittelter Wert ($w_m$) als Maß für eine Wahrscheinlichkeit herangezogen und ausgewertet wird, ob im jeweiligen Zeitabschnitt das Synchronisationssignal vorhanden ist (105).

2. Verfahren nach Anspruch 1, *dadurch gekennzeichnet, dass* für eine Erzeugung des Synchronisationssymbol im Frequenzbereich eine Amplitude von jeder der benutzten Trägerfrequenzen mit einem gleichen Wert belegt wird und Amplituden von nicht genutzten Trägerfrequenzen des Übertragungskanals auf den Wert Null gesetzt werden, und dass eine Phase für die jeweils für das Synchronisationssymbol genutzten Trägerfrequenzen auf Basis von

$$X_{k(i)} = \begin{cases} e^{j*\pi*i^2}; & i \leq \dfrac{n}{2} \\ e^{j*\pi(n-i)^2}; & i > \dfrac{n}{2} \end{cases}$$

oder auf Basis von

$$X_{k(i)} = \begin{cases} e^{j*\frac{\pi}{2}*\lfloor 2i^2 \rfloor}; & i \leq \dfrac{n}{2} \\ e^{j*\frac{\pi}{2}*\lfloor 2(n-i)^2 \rfloor}; & i > \dfrac{n}{2} \end{cases}$$

ermittelt werden, wobei $X_{k(i)}$ einen komplexwertigen Signalvektor für die jeweils genutzte Trägerfrequenz mit dem Index k, i eine Laufvariable, von welcher die Werte 0 bis n-1 angenommen werden, wobei n eine Gesamtheit der genutzten Trägerfrequenzen angibt, e die Euler'sche Zahl und j die imaginäre Einheit bezeichnen.

3. Verfahren nach einem der Ansprüche 1 bis 2, *dadurch gekennzeichnet, dass* für die Mehrträgersignalübertragung ein so genanntes orthogonales Frequenzmultiplexverfahren bzw. OFDM-Verfahren oder ein so genanntes Discrete Multitone Transmission-Verfahren bzw. DMT-Verfahren genutzt wird, und dass als Synchronisationssymbol entsprechend ein OFDM-Symbol oder ein DMT-Symbol verwendet wird (101).

4. Verfahren nach einem der Ansprüche 1 bis 3, *dadurch gekennzeichnet, dass* als vorgegebene Synchronisationsfolge zur Modulation des Synchronisationssymbols eine Codefolge mit minimalen Nebenmaxima oder so genannten Nebenzipfeln in einer zugehörigen Autokorrelationsfunktion verwendet wird (102) .

5. Verfahren nach einem der Ansprüche 1 bis 4, *dadurch gekennzeichnet, dass* die sendespezifische Zustandsinformation durch wiederholtes Aussenden des Synchronisationssignals und/oder Modulation der vorgebbaren Wiederholungsperiode des Synchronisationssignals übertragen wird (103).

6. Verfahren nach einem der Ansprüche 1 bis 5, *dadurch gekennzeichnet, dass* als sendespezifische Zustandsinformation eine Zustandsinformation der Sendeeinheit und/oder eine Information über einen Synchronisationszustand der Sendeeinheit übertragen werden (103).

7. Verfahren nach einem der Ansprüche 1 bis 6, *dadurch gekennzeichnet, dass* als Länge des Zeitausschnitts des empfangenen Signals eine Länge eines Synchronisationssignals gewählt wird.

8. Verfahren nach einem der Ansprüche 1 bis 7, *dadurch gekennzeichnet, dass* durch einen empfängerseitigen Vergleich eines Referenzsymbols, welches dem gesendeten Synchronisationssymbol entspricht, mit jenem Master-Symbol, bei welchem mit hoher Wahrscheinlichkeit der Synchronisierungszeitpunkt detektiert worden ist, eine Amplitudendämpfung und/oder eine Phasendrehung des Übertragungskanals abgeschätzt werden (105).

## Claims

1. Method for synchronisation between a transmit unit and at least one receive unit with multi-carrier signal transmission via a transmit channel, wherein a large number of carrier frequencies is used for a signal transmission with multi-carrier signal transmission; comprising the following steps:

   - generating a synchronisation symbol using predefined carrier frequencies (101) in the frequency range;
   - generating a synchronisation signal by modulation of the generated synchronisation symbol with a predefined synchronisation sequence by way of the transmit unit (102), wherein a temporal duration of the synchronisation signal corresponds to a duration of the synchronisation symbol multiplied by a length of the predefined synchronisation sequence;
   - emission of the synchronisation signal by the transmit unit with a predefinable repetition period (103), wherein the synchronisation signal is used for transmission of an item of transmit-specific status information and wherein a change in amplitude and/or polarity of the synchronisation signal is carried out for the transmission of the transmit-specific status information;
   - following transmission by way of the transmit channel, receipt of a signal by the receive unit (104), wherein the received signal is formed by the synchronisation signal emitted repeatedly with the predefinable repetition period; and
   - detecting and evaluating the received signal by means of a detection algorithm, which is based on a delay and correlation algorithm, by way of the receive unit (105), wherein the detection algorithm determines a period of the received signal as the synchronisation instant, a period of the received signal is used continuously in the receive unit in each case, a respective average value weighted with the predefined synchronisation sequence is formed as what is known as a respective master symbol for the respective period of the received signal, the respective master symbol is modulated with the predefined synchronisation sequence and correlated with the respective period of the received signal, and a value ($w_m$) determined in such a way is used and evaluated as a measure of a probability to determine whether the synchronisation signal is present in the respective period.

2. Method according to claim 1, **characterised** in **that** for generation of the synchronisation symbol in the frequency range, an amplitude of each of the carrier frequencies used is occupied by an identical value, and amplitudes of unused carrier frequencies of the transmit channel are set to the value zero and **in that** a phase is determined for the carrier frequencies used in each case for the synchronisation symbol on the basis of

$$X_{k(i)} = \begin{cases} e^{j*\pi*i^2}; & i \leq \dfrac{n}{2} \\ e^{j*\pi(n-i)^2}; & i > \dfrac{n}{2} \end{cases}$$

   or on the basis of

$$X_{k(i)} = \begin{cases} e^{j*\frac{\pi}{2}*\lfloor 2i^2 \rfloor}; & i \leq \dfrac{n}{2} \\ e^{j*\frac{\pi}{2}*\lfloor 2(n-i)^2 \rfloor}; & i > \dfrac{n}{2} \end{cases}$$

   where $X_{k(i)}$ designates a complex-valued signal vector for the respectively used carrier frequency with the index k, i designates a control variable which assumes the values 0 to n-1, wherein n indicates a totality of the carrier frequencies used, e designates the Euler's number and j the imaginary unit.

3. Method according to one of claims 1 to 2, **characterised** in **that** what is known as an orthogonal frequency division multiplexing method or OFDM method or what is known as a Discrete Multitone Transmission method or DMT method is used for multi-carrier signal transmission, and that an OFDM symbol or a DMT symbol is used (101) accordingly as the synchronisation symbol.

4. Method according to one of claims 1 to 3, *characterised in that* a code sequence with minimum side lobes or what are known as secondary lobes is used (102) in an associated autocorrelation function as a predefined synchronisation sequence for modulation of the synchronisation symbol.

5. Method according to one of claims 1 to 4, *characterised* in *that* the transmit-specific additional information is transmitted (103) by repeated emission of the synchronisation signal and/or modulation of the predefinable repetition period of the synchronisation signal.

6. Method according to one of claims 1 to 5, *characterised* in *that* an item of status information of the transmit unit and/or an item of information about a synchronisation state of the transmit unit is/are transmitted (103) as the transmit-specific additional information.

7. Method according to one of claims 1 to 6, *characterized in that* a length of a synchronisation signal is chosen as the length of the period of the received signal.

8. Method according to one of claims 1 to 7, *characterised in that* amplitude damping and/or a phase rotation of the transmit channel are estimated (105) by a comparison of a reference symbol, which corresponds to the transmitted synchronisation symbol, with that master symbol with which the synchronisation instant was almost certainly detected.

**Revendications**

1. Procédé destiné à la synchronisation entre une unité émettrice et au moins une unité réceptrice dans la transmission de signal multi-supports sur un canal de transmission, dans lequel lors de la transmission de signal multi-supports, une pluralité de fréquences porteuses sont utilisées pour une transmission de signal, dans lequel
   les étapes suivantes sont comprises :

   - production d'un symbole de synchronisation en utilisant des fréquences porteuses (101) prédéfinies dans la plage de fréquences ;
   - production d'un signal de synchronisation par modulation du symbole de synchronisation produit avec une séquence de synchronisation prédéfinie par l'unité émettrice (102), dans lequel une durée temporelle du signal de synchronisation correspond à une durée du symbole de synchronisation multiplié par une longueur de la séquence de synchronisation prédéfinie ;
   - envoi du signal de synchronisation par l'unité émettrice avec une période de répétition (103) pouvant être prédéfinie, dans lequel le signal de synchronisation est utilisé pour une transmission d'une information d'état spécifique à l'émission, et dans lequel une modification d'une amplitude et/ou d'une polarité du signal de synchronisation est exécutée pour la transmission de l'information d'état spécifique à l'émission ;
   - après transmission par le canal de transmission, réception d'un signal par l'unité réceptrice (104), dans lequel le signal reçu est formé par le signal de synchronisation envoyé de manière répétée avec la période de répétition pouvant être prédéfinie ; et
   - détection et évaluation du signal reçu au moyen d'un algorithme de détection qui s'appuie sur un algorithme de retardement et de corrélation, par l'unité réceptrice, dans lequel un découpage temporel du signal reçu est calculé par l'algorithme de détection en tant que moment de synchronisation, de telle sorte que dans l'unité réceptrice, un découpage temporel du signal reçu est pris en continu, que pour le découpage temporel respectif du signal reçu, une valeur moyenne respective pondérée avec la séquence de synchronisation prédéfinie est formée en tant que dit symbole-maître respectif, que le symbole-maître respectif est modulé avec la séquence de synchronisation prédéfinie et corrélé avec le découpage temporel respectif du signal reçu, et qu'une valeur ($W_m$) ainsi déterminée est prise et évaluée en tant que mesure d'une probabilité quant à la présence (105) du signal de synchronisation dans le découpage temporel respectif.

2. Procédé selon la revendication 1, **caractérisé en ce qu'**une production du symbole de synchronisation dans la plage de fréquences, une amplitude de chacune des fréquences porteuses utilisée est occupée avec une valeur égale et des amplitudes de fréquences porteuses non utilisées du canal de transmission sont mises à la valeur zéro, et qu'une phase pour les fréquences porteuses utilisées respectivement pour le symbole de synchronisation sont calculées en se basant sur

$$X_{k(i)} = \begin{cases} e^{j*\pi*i^2}; & i \leq \dfrac{n}{2} \\ e^{j*\pi(n-i)^2}; & i > \dfrac{n}{2} \end{cases}$$

ou en se basant sur

$$X_{k(i)} = \begin{cases} e^{j*\frac{\pi}{2}*[2i^2]}; & i \leq \dfrac{n}{2} \\ e^{j*\frac{\pi}{2}*[2(n-i)^2]}; & i > \dfrac{n}{2} \end{cases}$$

dans lequel $X_{k(i)}$ signifie un vecteur de signal à valeur complexe pour la fréquence porteuse respective utilisée avec l'indice k, i étant une variable courante de laquelle on suppose les valeurs 0 à n-1, n étant un ensemble des fréquences porteuses utilisées, e étant le nombre d'Euler et j étant l'unité imaginaire.

3. Procédé selon l'une des revendications 1 à 2, **caractérisé en ce que** pour la transmission de signal multi-supports sont employés un dit multiplexage par répartition orthogonale de la fréquence, respectivement procédé OFDM, ou un procédé dit discrète multitone transmission (multitonalité binaire), respectivement procédé DMT, et qu'un symbole OFDM ou un symbole DMT sont employés (101) en tant que symbole de synchronisation.

4. Procédé selon l'une des revendications 1 à 3, **caractérisé en ce qu'**une séquence de codes avec des maximums secondaires minimaux ou desdits lobes secondaires est employée (102) dans une fonction d'auto-corrélation correspondante pour moduler le symbole de synchronisation.

5. Procédé selon l'une des revendications 1 à 4, **caractérisé en ce que** l'information d'état spécifique à l'émission est transmise (103) par l'envoi répété du signal de synchronisation et/ou la modulation de la période de répétition pouvant être prédéfinie du signal de synchronisation.

6. Procédé selon l'une des revendications 1 à 5, **caractérisé en ce qu'**une information d'état de l'unité émettrice et/ou une information sur un état de synchronisation de l'unité émettrice sont envoyées (103) en tant qu'information d'état spécifique à l'émission.

7. Procédé selon l'une des revendications 1 à 6, **caractérisé en ce qu'**une longueur d'un signal de synchronisation est choisie en tant que longueur du découpage temporel du signal reçu.

8. Procédé selon l'une des revendications 1 à 7, **caractérisé en ce qu'**une atténuation d'amplitude et/ou une rotation de phase du canal de transmission sont évaluées (105) par une comparaison effectuée par le récepteur, d'un symbole de référence qui correspond au symbole de synchronisation envoyé, avec le symbole-maître pour lequel le moment de synchronisation a été détecté avec une probabilité élevée.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016015782 A1
- US 2014334478 A1
- WO 9952252 A
- EP 2461502 A1
- US 2013136063 A1
- US 2004114551 A1